# EUROPEAN PATENT SPECIFICATION

(11) **EP 4 407 831 B1**
(45) Date of publication and mention of the grant of the patent: **27.05.2026**
(21) Application number: 23825990.7
(22) Date of filing: 06.05.2023
(51) Int. Cl.: H02J 7/00, H02J 7/34

(54) **ELECTRONIC DEVICE**
ELEKTRONISCHE VORRICHTUNG
DISPOSITIF ÉLECTRONIQUE

(30) Priority: 24.06.2022 CN 202210725580
(43) Date of publication of application: 31.07.2024
(73) Proprietor: Honor Device Co., Ltd., Shenzhen, Guangdong 518040 (CN)
(72) Inventor: ZHANG, Tingwei, Shenzhen, Guangdong 518040 (CN); WANG, Feng, Shenzhen, Guangdong 518040 (CN); LI, Zhongming, Shenzhen, Guangdong 518040 (CN); ZHAO, Lilie, Shenzhen, Guangdong 518040 (CN)
(74) Representative: Beder, Jens
(86) International application number: PCT/CN2023/092588
(87) International publication number: WO 2023/246340

(56) References cited:
- EP-A1- 3 832 841
- WO-A1-2021/082731
- CN-A- 106 026 247
- CN-A- 112 564 075
- CN-A- 113 162 161
- CN-A- 113 949 167
- CN-A- 116 054 299
- US-A1- 2018 166 889
- US-A1- 2022 131 393

## Description

### TECHNICAL FIELD

This application relates to the field of fast charging technologies, and in particular, to an electronic device.

### BACKGROUND

With the development of portable terminal devices, battery life requirements of the portable terminal devices receive unprecedented attention. Currently, most portable terminal devices support a reverse charging function. Using the reverse charging function of the portable terminal devices to charge portable terminal devices that need to be charged becomes a popular charging solution.

The US 2022/131393 A1 shows an electronic device for providing fast charging. The electronic device may include: a power management module; a USB connection terminal; a processor operably connected to the power management module and the USB connection terminal; and a memory operably connected to the processor.

In WO 2021/082731 A1 an electronic device and reverse charging method is provided, wherein the electronic device may be a terminal device that supports a reverse charging function.

The EP 3832841 A1 discloses a charging circuit that is applied to a first electronic device, and that includes a charging interface, a charging module coupled therewith and configured to detect a connection between the charging interface and a second electronic device, and to adjust a current output to the second device, a reverse charging protocol module, and a control module.

However, the existing reverse charging solution has a problem of low external charging power and cannot meet a high-power fast charging requirement expected by a user.

### SUMMARY

This application provides an electronic device, configured to implement high-power reverse charging and meet a high-power reverse fast charging requirement. The invention is defined in the independent claim 1. Additional features of the invention are provided in the dependent claims.

### BRIEF DESCRIPTION OF DRAWINGS

FIG. 1 is a schematic circuit diagram of a possible reverse charging solution of an electronic device, not being encompassed by the appended set of claims but useful for understanding the invention;
FIG. 2 is a flowchart of reverse charging of the electronic device shown in FIG. 1, device, not being encompassed by the appended set of claims but useful for understanding the invention;
FIG. 3 is a schematic structural diagram 1 of an electronic device according to some embodiments of this application;
FIG. 4 is a schematic structural diagram 2 of an electronic device according to some embodiments of this application; and
FIG. 5 is a flowchart of a charging control method according to an embodiment of this application, not being encompassed by the appended set of claims but useful for understanding the invention.

### DESCRIPTION OF EMBODIMENTS

With the development of portable terminal devices, battery life requirements of the portable terminal devices receive unprecedented attention. Currently, most portable terminal devices support a reverse charging function. Using the reverse charging function of the portable terminal devices to charge portable terminal devices that need to be charged becomes a popular charging solution. The following uses a personal computer (personal computer, PC) as an example to describe a reverse charging solution of a portable device.

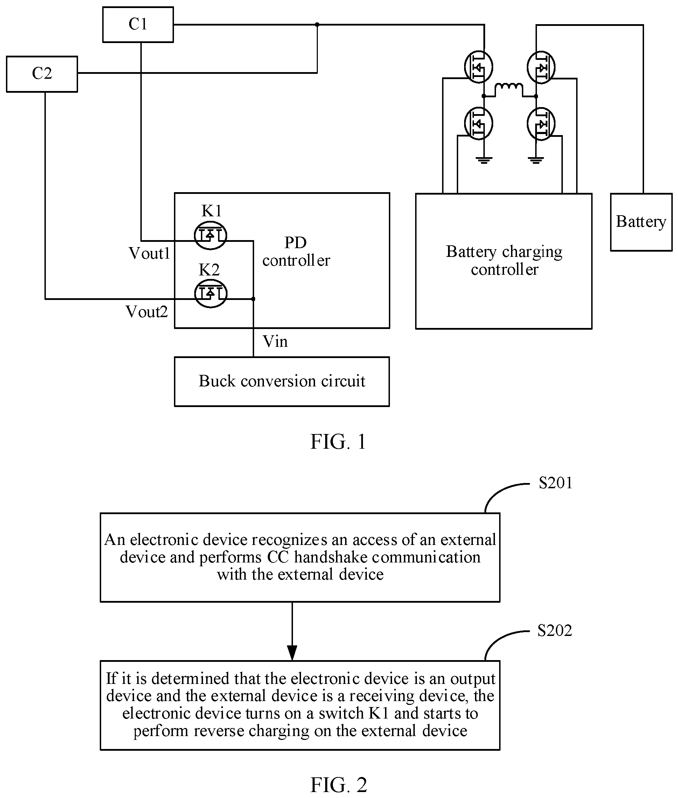

Refer to FIG. 1. FIG. 1 is a schematic circuit diagram of a possible reverse charging solution of an electronic device, not falling under the scope of the claims, but useful for understanding the invention. The electronic device is a PC, including a power delivery (power delivery, PD) controller, a charging controller (also referred to as a charger), a battery, and two Type-C interfaces: an interface C1 and an interface C2. The interface C1 and the interface C2 are configured to be connected to an external device to implement some functions between the external device and the electronic device, such as a forward charging function (charging the electronic device through the external device) or a reverse charging function (charging the external device through the electronic device). The PD controller is configured for interactive communication of a charging protocol with the external device. The battery charging controller is configured to convert a voltage input by the external device through the interface C1 or the interface C2 into a suitable voltage, and then supply the voltage to a device and a battery to which the PC needs to supply power, so that forward charging is implemented.

The PD controller is provided with a power input end Vin, a first power output end Vout1, and a second power output end Vout2. The power input end Vin is configured to receive a power supply voltage (such as 5 V) input by a buck conversion (BUCK) circuit to ensure normal operation of the PD controller. In this case, the power input end Vin is further connected to the first power output end Vout1 and the second power output end Vout2 respectively through a switch K1 and a switch K2 located inside the PD controller. It should be understood that by controlling the switch K1 and the switch K2 to be turned on, the power input end Vin may be connected to the first power output end Vout1 and the second power output end Vout2, to output the power supply voltage input from the power input end Vin to the first power output end Vout1 and the second power output end Vout2, so that the PD controller has an external power supply capability. In the electronic device shown in FIG. 1, the first power output end Vout1 is connected to the interface C1, and the second power output end Vout2 is connected to the interface C2. In this way, the PD controller may provide voltage output to the interface C1 and the interface C2 respectively through the first power output end Vout1 and the second power output end Vout2 to implement the reverse charging function.

By using the interface C1 as an example, a process of reverse charging of the electronic device is described in detail below with reference to FIG. 2.

Refer to FIG. 2. FIG. 2 is a flowchart of reverse charging of the electronic device shown in FIG. 1, not falling under the scope of the claims, but useful for understanding the invention. The following steps are included.

S201: An electronic device recognizes an access of an external device and performs CC handshake communication with the external device.

In a specific implementation, when the interface C1 accesses the external device, the interface C1 sends an interrupt signal to the PD controller. The PD controller recognizes the access of the external device based on the interrupt signal, and then performs handshake communication with the external device in a configuration channel (configuration channel, CC) to determine types of the electronic device and the external device. If the type of the electronic device is an output device (also referred to as a source device) and the type of the external device is a receiving device (also referred to as a sink device), it indicates that the electronic device performs reverse charging on the external device. If the electronic device is the sink device and the external device is the output device, it indicates that the external device performs forward charging on the electronic device. In this example, the electronic device is the source device and the external device is the sink device.

S202: If it is determined that the electronic device is an output device and the external device is a receiving device, the electronic device turns on a switch K1 and starts to perform reverse charging on the external device.

It should be noted that in the foregoing reverse charging process, according to the PD protocol, a maximum current is 3A. Affected by specification constraints, the current output by the electronic device may be further limited. It can be seen that the electronic device in FIG. 1 can only provide a maximum charging power supply of 15 W (5 V/3 A), which cannot meet a high-power fast charging requirement expected by a user. It should be noted that although FIG. 1 and FIG. 2 use two interfaces as an example to describe the problem that the electronic device cannot meet the high-power fast charging requirement expected by the user, in another embodiment, the electronic device including more or fewer interfaces still has the foregoing problem. The principle that causes the foregoing problem is similar and is not described again herein.

To resolve the foregoing technical problem, this application provides an electronic device. For example, the electronic device may be a device that supports a reverse charging function such as a power bank, a mobile phone, a tablet computer, a desktop computer, a laptop computer, a handheld computer, a notebook computer, an ultra-mobile personal computer (ultra-mobile personal computer, UMPC), a netbook, and the like. A specific form of the device is not specially limited in embodiments of this application.

It should be noted that in the reverse charging solution shown in FIG. 1, the function of the battery charging controller is to convert a power supply of the external device to the battery. However, some battery charging controllers further have a reverse output function that allows the battery to supply power to input ends of the battery charging controllers, so that output ends of the battery charging controllers may provide power output. Currently, only a forward output function of the battery charging controller is used, so there is only one path on hardware and simultaneous existence of two functions cannot be supported. Based on this, on the basis of FIG. 1, in this embodiment of this application, when the electronic device is not in a forward charging state, the reverse output function of the battery charging controller is used to allow the battery to provide power output through the battery charging controller to implement the reverse charging function. Since the electronic device implements reverse charging through a larger-capacity battery, a greater power output may be implemented and the high-power fast charging requirement of the user is met.

The following describes implementations of embodiments of this application in detail with reference to the accompanying drawings.

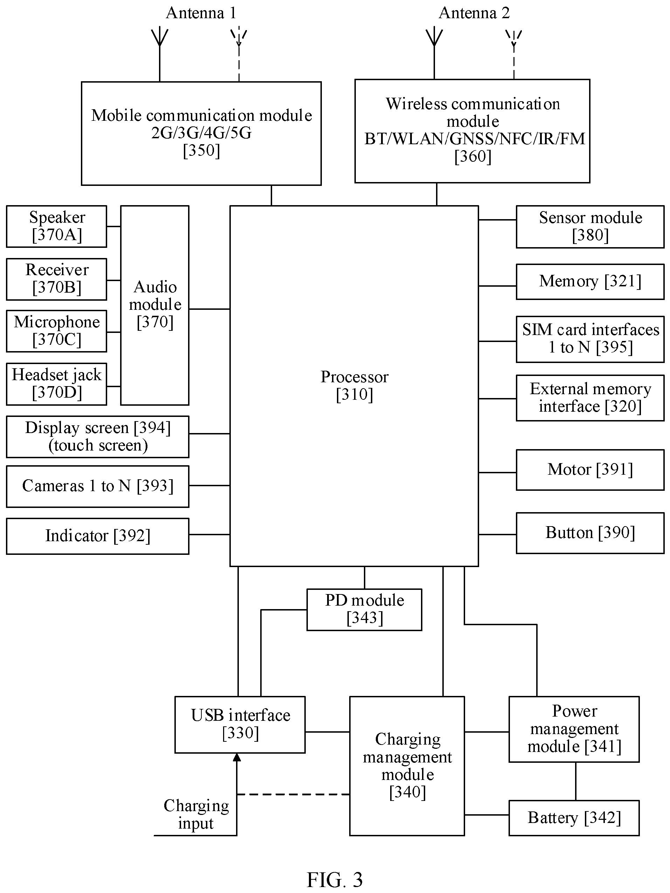

Refer to FIG. 3. FIG. 3 is a schematic structural diagram 1 of an electronic device according to some embodiments of this application. As shown in FIG. 3, an electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a phone receiver 370B, a microphone 370C, a headset jack 370D, a sensor module 380, a button 390, a motor 391, an indicator 392, a camera 393, a display screen 394, a subscriber identity module (subscriber identity module, SIM) card interface 396, and the like.

It may be understood that the schematic structure in this embodiment constitutes no specific limitation on the electronic device 300. In some other embodiments of this application, the electronic device 300 may include more or fewer components than those shown in the figure, or some components may be combined, or some components may be split, or components are arranged in different manners. The illustrated components may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 300. The controller may generate an operation control signal based on an instruction operation code and a timing signal, and implement control on instruction fetching and instruction execution.

A memory may be further configured in the processor 310, to store an instruction and data. In some embodiments, the memory in the processor 310 is a cache memory. The memory may store an instruction or data that is recently used or to be cyclically used by the processor 310. If the processor 310 needs to use the instruction or the data again, the processor may directly invoke the instruction or the data from the memory, so that repeated access is avoided, and a waiting time of the processor 310 is reduced, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

It should be noted that although FIG. 3 only illustrates a USB interface and a connection relationship of the USB interface. However, it should be understood that in embodiments of this application, the electronic device 300 includes one or more USB interfaces 330. In a specific implementation, the USB interface 330 may be a Type-C interface or the like.

It may be understood that a schematic interface connection relationship between the modules in embodiments is merely an example for description, and constitutes no limitation on the structure of the electronic device 300. In some other embodiments, the electronic device 300 may alternatively use an interface connection manner different from that in the foregoing embodiment, or use a combination of a plurality of interface connection manners.

The charging management module 340 is configured to receive charging input from the charger. The charger may be a wireless charger or may be a wired charger. In some embodiments of wired charging, the charging management module 340 may receive charging input of the wired charger through the USB interface 330. In some embodiments of wireless charging, the charging management module 340 may receive a wireless charging input by using a wireless charging coil of the electronic device 300. The charging management module 340 may supply power to the electronic device by using the power management module 341 while charging the battery 342.

The PD module 343 is configured for charging protocol communication with the external device coupled to the electronic device 300 through the USB interface 330.

The power management module 341 is configured to be connected to the battery 342, the charging management module 340, and the processor 310. The power management module 341 receives input from the battery 342 and/or the charging management module 340, to supply power to the processor 310, the internal memory 321, an external memory, the display screen 394, the camera 393, the wireless communication module 360, and the like. The power management module 341 may be further configured to monitor parameters such as a battery capacity, a cycle count of a battery, and a battery health state (leakage and impedance). In some other embodiments, the power management module 341 may alternatively be disposed in the processor 310. In some other embodiments, the power management module 341 and the charging management module 340 may also be disposed in a same device.

A wireless communication function of the electronic device 300 may be implemented by using the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna of the electronic device 300 may be configured to cover one or more communication frequency bands. Different antennas may further be reused to improve utilization of the antennas. For example, the antenna 1 may be reused as a diversity antenna of a wireless local area network. In some other embodiments, the antenna may be used in combination with a tuning switch.

The mobile communication module 350 may provide a solution to wireless communication such as 2G/3G/4G/3G applied to the electronic device 300. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and send the electromagnetic wave to the modem processor for demodulation. The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some functional modules of the mobile communication module 350 and at least some modules of the processor 310 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transmitted to an application processor. The application processor outputs a sound signal by using an audio device (not limited to the speaker 370A, the phone receiver 370B, or the like), or displays an image or a video by using the display screen 394. In some embodiments, the modem processor may be an independent device. In some other embodiments, the modem processor may be independent of the processor 310, and the modem processor and the mobile communication module 350 or another functional module may be arranged in the same component.

The wireless communication module 360 may provide a solution for wireless communication including a wireless local area network (wireless local area network, WLAN) (for example, a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device 300. The wireless communication module 360 may be one or more components integrating at least one communication processor module. The wireless communication module 360 receives an electromagnetic wave via the antenna 2, performs frequency modulation and filtering on the electromagnetic wave signal, and sends the processed signal to the processor 310. The wireless communication module 360 may also receive a to-be-sent signal from the processor 310, perform frequency modulation and amplification on the to-be-sent signal, and convert the signal into an electromagnetic wave for radiation through the antenna 2.

In some embodiments, the antenna 1 and the mobile communication module 350 of the electronic device 300 are coupled, and the antenna 2 and the wireless communication module 360 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS) and/or satellite-based augmentation systems (satellite based augmentation systems, SBAS).

The electronic device 300 implements a display function by using the GPU, the display screen 394, the application processor, and the like. The GPU is a microprocessor for image processing, and is connected to the display screen 394 and the application processor. The GPU is configured to perform mathematical and geometric calculations and perform graphics rendering. The processor 310 may include one or more GPUs and execute program instructions to generate or change display information.

The display screen 394 is configured to display an image and a video. The display screen 394 is sometimes referred to as a display module, and usually includes a display panel and a driving circuit for driving the display panel to display. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. A driver module includes a display driver integrated circuit (display driver integrated circuit, DDIC) and an array formed by TFT devices.

The electronic device 300 may implement a photographing function by using the ISP, the camera 393, the video codec, the GPU, the display screen 394, the application processor, and the like.

The ISP is used to process data fed back by the camera 393. For example, during photographing, a shutter is opened, light is transferred to a camera photosensitive element by using a lens, an optical signal is converted into an electrical signal, and the camera photosensitive element transfers the electrical signal to the ISP for processing, to convert the electrical signal into an image visible to a naked eye. The ISP may also optimize noise point, brightness, and skin tone algorithms. The ISP may alternatively optimize parameters such as exposure and a color temperature of a photographing scenario. In some embodiments, the ISP may be disposed in the camera 393.

The camera 393 is configured to capture a static image or a video. An optical image of an object is generated through a lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in RGB and YUV formats. In some embodiments, the electronic device 300 may include 1 or N cameras 393, and N is a positive integer greater than 1.

The digital signal processor is configured to process a digital signal, and in addition to a digital image signal, may further process another digital signal. For example, when the electronic device 300 performs frequency selection, the digital signal processor is configured to perform Fourier transform and the like on frequency energy.

The video codec is configured to compress or decompress a digital video. The electronic device 300 may support one or more video codecs. In this way, the electronic device 300 may play or record videos in a plurality of encoding formats, for example: moving picture experts group (moving picture experts group, MPEG) 1, MPEG 2, MPEG 3, and MPEG 4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement an application such as intelligent cognition of the electronic device 300, for example, image recognition, facial recognition, voice recognition, and text understanding.

The external memory interface 320 may be configured to be connected to an external storage card, for example, a micro SD card, to expand a storage capability of the electronic device 300. The external storage card communicates with the processor 310 by using the external memory interface 320, to implement a data storage function, such as storing a file such as music or a video in the external storage card.

The internal memory 321 may be configured to store computer executable program code, where the executable program code includes instructions. The processor 310 runs the instructions stored in the internal memory 321, to perform various function applications and data processing of the electronic device 300. For example, in this embodiment of this application, the processor 310 may detect a folding angle (that is, an included angle between adjacent screens) of the display screen 394 (that is, a folding screen) by executing instructions stored in the internal memory 321, and displays display content (that is, an image) corresponding to the included angle in response to changes of the included angle. The internal memory 321 may include a program storage area and a data storage area. The program storage area may store an operating system, an application program required by at least one function (for example, a sound playback function and an image display function), and the like. The data storage area may store data (for example, audio data and an address book) and the like created when the electronic device 300 is used. In addition, the internal memory 321 may include a highspeed random access memory, or may include a non-volatile memory such as at least one magnetic disk memory, a flash memory, or a universal flash storage (universal flash storage, UFS).

The electronic device 300 may implement an audio function such as music playing or recording by using the audio module 370, the speaker 370A, the phone receiver 370B, the microphone 370C, the headset jack 370D, the application processor, and the like. For example, implement a music playback function and a recording function.

The audio module 370 is configured to convert digital audio information into an analog audio signal output, and is further configured to convert an analog audio input into a digital audio signal. The audio module 370 may be further configured to encode and decode an audio signal. In some embodiments, the audio module 370 may be disposed in the processor 310, or some function modules of the audio module 370 are disposed in the processor 310. The speaker 370A, also referred to as a "loudspeaker", is configured to convert an audio electrical signal into a sound signal. The electronic device 300 may be used to listen to music or answer a call in a hands-free mode by using the loudspeaker 370A. The phone receiver 370B, also referred to as a "receiver", is configured to convert an audio electrical signal into a sound signal. When the electronic device 300 is used to answer a call or receive voice information, the phone receiver 370B may be put close to a human ear, to receive a voice. The microphone 370C, also referred to as a "mouthpiece" or a "megaphone", is configured to convert a sound signal into an electrical signal. When making a call or sending voice information or requiring a voice assistant to trigger the electronic device 300 to perform some functions, a user may speak with the mouth approaching the microphone 370C, to input a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may be alternatively disposed in the electronic device 300, to collect a sound signal, implement noise reduction, recognize a sound source, implement a directional recording function, and the like.

The headset jack 370D is configured to connect a wired headset. The headset jack 370D may be a USB interface 330, or may be a 3.3 mm open mobile terminal platform (open mobile terminal platform, OMTP) standard interface or cellular telecommunications industry association of the USA (cellular telecommunications industry association of the USA, CTIA) standard interface.

The button 390 includes a power button, a volume button, and the like. The button 390 may be a mechanical button, or may be a touch-type button. The electronic device 300 may receive button input, and generate button signal input related to user setting and function control of the electronic device 300.

The motor 391 may generate a vibration prompt. The motor 391 may be configured to provide a vibration prompt for an incoming call, and may be further configured to provide a touch vibration feedback. For example, touch operations performed on different applications (for example, photo taking and audio playing) may correspond to different vibration feedback effects. For touch operations performed on different areas of the display screen 394, the motor 391 may also correspond to different vibration feedback effects. Different application scenarios (for example, a time reminder, information receiving, an alarm clock, and a game) may further correspond to different vibration feedback effects. A touch vibration feedback effect may be further customized.

The indicator 392 may be an indicator light, may be configured to indicate a charging state and a battery change, and may be further configured to indicate a message, a missed call, a notification, and the like.

The SIM card interface 396 is configured to connect to a SIM card. The SIM card may be inserted into the SIM card interface 396 or plugged from the SIM card interface 396, to come into contact with or be separated from the electronic device 300. The electronic device 300 may support one or N SIM card interfaces. N is a positive integer greater than 1. The SIM card interface 396 can support a Nano SIM card, a Micro SIM card, a SIM card, and the like. A plurality of cards may be inserted into a same SIM card interface 396 at the same time. The plurality of cards may be of a same type or different types. The SIM card interface 396 may be further compatible with different types of SIM cards. The SIM card interface 396 may also be compatible with an external memory card. The electronic device 300 interacts with a network by using a SIM card, to implement functions such as a call and data communication. In some embodiments, the electronic device 300 uses an eSIM, that is, an embedded SIM card. The eSIM card may be embedded in the electronic device 300 and cannot be separated from the electronic device 300.

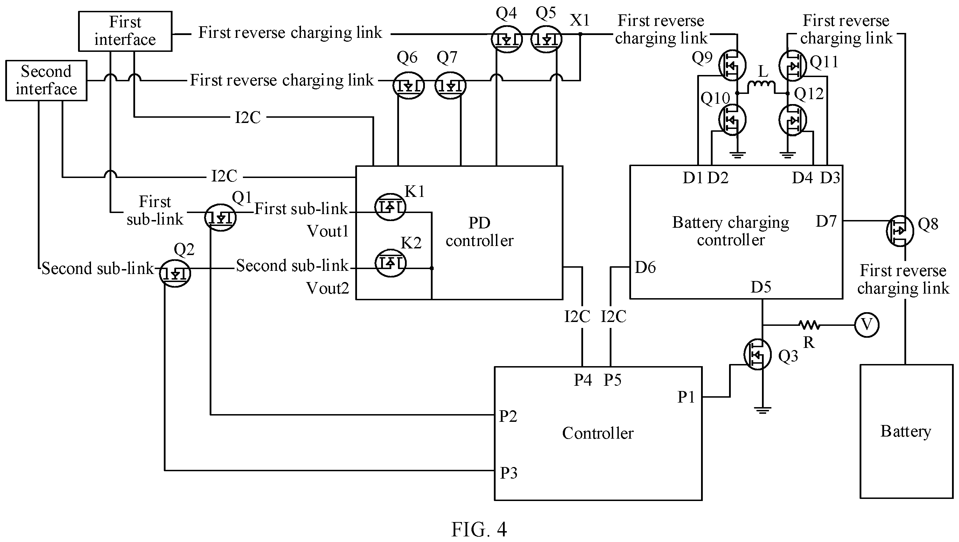

Refer to FIG. 4. FIG. 4 is a schematic structural diagram 2 of an electronic device according to some embodiments of this application (the electronic device 300 shown in FIG. 3). The electronic device includes a battery, two charging interfaces (a first interface and a second interface respectively), a PD controller (the PD module 343 shown in FIG. 3), a battery charging controller, a first reverse charging link (all paths identified through the first reverse charging link in the figure form the first reverse charging link), two second reverse charging links: a first sub-link (all paths identified through the first sub-link in the figure form the first sub-link) and a second sub-link (all paths identified through the second sub-link in the figure form the second sub-link) respectively, and a controller (the controller in the processor 310 shown in FIG. 3). It should be understood that the battery may be understood as the battery 342 shown in FIG. 3, the PD controller may be understood as the PD module 343 shown in FIG. 3, and the controller may be understood as the controller in the processor 310 shown in FIG. 3.

The battery is configured to receive power input or provide power output.

Both the first interface and the second interface are configured for the electronic device to be connected to the external device, such as a charger for charging the electronic device, or a mobile phone that needs to be charged. In a specific implementation, the first interface and the second interface may be Type-C interfaces. It should be understood that in this embodiment, the first interface and the second interface may be in the following three states: neither is connected to the external device, one is connected to the external device and the other is connected to the external device, or both are connected to the external device.

The PD controller is coupled to the first interface and the second interface respectively (in FIG. 4, an inter-integrated circuit (inter-integrated circuit, I2C) between the first interface and the PD controller and an I2C between the second interface and the PD controller show a coupling relationship), and the PD controller is configured to obtain connection information of the first interface and connection information of the second interface. The connection information indicates a connection status of the charging interface, and the connection status includes connected state or non-connected state. The connected state indicates that the charging interface (such as the first interface or the second interface) is connected to the external device, and the non-connected state indicates that the charging interface is not connected to the external device. In addition, the connection information further indicates a device type of the external device when the charging interface is connected to the external device (that is, in the connected state). The device type includes a source device or a sink device. The source device is a device that provides power output, and the sink device is a device that receives power input. The following uses an example in which the first interface is connected or is not connected to the external device as an example to describe a process of obtaining the connection information by the PD controller. Details are as follows:

When the external device detaches from the first interface in response to an unplugging operation of the user, the first interface sends a first interrupt signal to the PD signal. After receiving the first interrupt signal, the PD controller determines, based on the first interrupt signal, that the first interface is in the non-connected state. When the external device accesses the first interface in response to an access operation of the user, the first interface sends a second interrupt signal to the PD signal. After receiving the second interrupt signal, the PD controller determines, based on the second interrupt signal, that the first interface is in the connected state. It should be noted that the PD controller has a function of performing charging protocol communication with the external device connected to the first interface. Based on this, when it is determined that the first interface is in the connected state, the PD controller establishes CC handshake communication with the external device to determine the device type of the external device. It should be understood that the external device and the electronic device are source devices and sink devices for each other, that is to say, one of the external device and the electronic device is the source device, and the other of the external device and the electronic device is the sink device.

In this embodiment, the connection information indicates only the device type of the external device. It should be understood that in another embodiment, the connection information may also indicate the device type of the electronic device, or indicate the device types of the electronic device and the external device at the same time. Since the external device and the electronic device are source devices and sink devices for each other, after the device type of one of the devices is determined, the device type of the other device may be obtained. Embodiments of this application do not specifically limit an object of the device type indicated by the connection information.

In addition, the PD controller has two power output ends: the first power output end Vout1 and the second power output end Vout2. The first power output end Vout1 and the second power output end Vout2 are configured to provide power output, such as 5 V/3 A output.

The foregoing first interface is coupled to the first power output end Vout1 of the PD controller through the first sub-link, and the foregoing second interface is coupled to the second power output end Vout2 of the PD controller through the second sub-link. That is, one charging interface is connected to one power output end through one second reverse charging link. Based on this, the electronic device may use the first power output end Vout1 of the PD controller to perform reverse charging on the external device connected to the first interface via the first sub-link; and may further use the second power output end Vout2 of the PD controller to perform reverse charging on the external device connected to the second interface via the second sub-link. It should be understood that the first sub-link and the second sub-link may be understood as links from the USB interface 330 to the PD module 343 shown in FIG. 3.

In a specific implementation, the first sub-link includes a first switching element Q1; and the second sub-link includes a second switching element Q2. A first end of the first switching element Q1 is coupled to the first interface, and a second end of the first switching element Q1 is coupled to the first power output end l Vout1. A first end of the second switching element Q2 is coupled to the second interface, and a second end of the second switching element Q2 is coupled to the second power output end Vout2.

For example, the first switching element Q1 and the second switching element Q2 may be N-type transistors. In this case, the first ends of the first switching element Q1 and the second switching element Q2 may be sources of the transistors, and the second ends of the first switching element Q1 and the second switching element Q2 may be drains of the transistors. In another embodiment, the first switching element Q1 and the second switching element Q2 may be switching chips. In this embodiment of this application, when the switching element is a transistor, the first end of the switching element refers to the source of the transistor, the second end of the switching element refers to the drain of the transistor, and the third end of the switching element refers to a gate of the transistor. Details are not described again.

In this embodiment, by setting the first switching element Q1 and the second switching element Q2 on the first sub-link and the second sub-link respectively, and by controlling the on and off of the first switching element Q1 and the second switching element Q2, the first sub-link and the second sub-link may be on and off, thereby switching the reverse charging link of the electronic device.

In addition, the foregoing first interface and the second interface are further coupled to the battery through the first reverse charging link. The first reverse charging link is coupled to the battery charging controller. It should be noted that in this embodiment, the battery charging controller includes a forward charging state (that is, the foregoing forward output function) and a reverse charging state (that is, the foregoing reverse output function). The fifth end D5 of the battery charging controller is configured to receive an external control instruction. In response to the external control instruction, the battery charging controller may switch to the forward charging state or the reverse charging state. When the battery charging controller operates in the reverse charging state, the battery charging controller may control the first reverse charging link to perform reverse charging. In this case, the electronic device may use the battery to perform reverse charging on the external device connected to the first interface and the second interface via the first reverse charging link. When the battery charging controller operates in the forward charging state, the battery charging controller may control the first reverse charging link to perform forward charging. In this case, the electronic device may use the first interface and the second interface to receive the power input provided by the external device, and then perform forward charging on the battery through the first reverse charging link. In this case, in some embodiments, power may also be supplied to other operating components of the electronic device.

In a specific implementation, a model of the foregoing battery charging controller may be BQ25713. This model of battery charging controller may operate in two states: the forward charging state and the reverse charging state.

It should be understood that the first reverse charging link may be understood as the link from the USB interface 330 to the battery 342 shown in FIG. 3, and the battery charging controller may be understood as the charging management module 340 shown in FIG. 3.

The controller may be an embed controller (embed controller, EC). A first end P1 (such as GPIO1) of the controller is coupled to the fifth end D5 of the battery charging controller, a second end P2 (such as GPIO1) of the controller is coupled to the first sub-link, a third end P3 of the controller (such as GPIO1) is coupled to the second sub-link, and a fourth end P4 of the controller is coupled to the PD controller (the I2C between the PD controller and the controller in the figure illustrates the coupling relationship). The controller is configured to obtain the connection information of the first interface and the connection information of the second interface through the fourth end P4 of the controller, and is further configured to control, when determining that the electronic device meets a first preset condition based on the connection information of the first interface and the connection information of the second interface, the battery charging controller to switch to the reverse charging state for performing reverse charging through the first end P1 of the controller, and to control the target link to be turned off through the second end P2 and the third end P3 of the controller.

The first preset condition includes that the electronic device is in a non-forward charging state, and the first interface and/or the second interface are connected to the sink device. In addition, the target link includes a second reverse charging link corresponding to the charging interface connected to the sink device in the first interface and the second interface. That is to say, if only the first interface is connected to the sink device, the target link includes the first sub-link; if only the second interface is connected to the sink device, the target link includes the second sub-link; and if the first interface and the second interface are each connected to the sink device, the target link includes the first sub-link and the second sub-link.

In a specific implementation, the second end P2 of the controller is coupled to the third end of the first switching element Q1, and the third end P3 of the controller is coupled to the third end of the second switching element Q2. The controller is configured to output a first control instruction through the second end P2 of the controller, and output a second control instruction through the third end P3 of the controller. The first control instruction and the second control instruction respectively instructs the first switching element Q1 and the second switching element Q2 to switch to the on state or the off state. When the first switching element Q1 and the second switching element Q2 switch to the on state, the first sub-link and the second sub-link are turned off; and when the first switching element Q1 and the second switching element Q2 switch to the off state, the first sub-link and the second sub-link are turned on.

Continuing with the foregoing example, the third ends of the first switching element Q1 and the second switching element Q2 may be gates of the N-type transistor.

In a specific implementation, the electronic device further includes a third switching element Q3. The first end P1 of the controller is coupled to a third end of the third switching element Q3, a second end of the third switching element Q3 is coupled to the fifth end D5 of the battery charging controller, and a first end of the third switching element Q3 is coupled to the reference ground. The controller is configured to output a third control instruction through the first end P1 of the controller. The third control instruction instructs the third switching element Q3 to switch to the on state or the off state, so that the third switching element Q3 outputs the foregoing external control instruction. When the third switching element Q3 switches to the on state, the third switching element Q3 sends a first external control instruction, and the first external control instruction instructs the battery charging controller to switch to the reverse charging state; and when the third switching element switches to the off state, the third switching element Q3 sends a second external control instruction, and the second external control instruction instructs the battery charging controller to switch to the forward charging state. For the specific implementation of the third switching element Q3, reference may be made to the specific implementation of the first switching element Q1, which will not be described again herein.

In this embodiment, by setting the third switching element Q3 and controlling the on and off of the third switching element Q3, the status switching of the battery charging controller is implemented, thereby realizing the switching of the reverse charging link of the electronic device. It should be noted that since a status control end of the battery charging controller is in a high-impedance state, the first end of the third switching element Q3 further needs to be connected to a pull-up resistor R.

It should be noted that that the electronic device is in the forward charging state means that the electronic device receives power input provided by the external device to charge the battery; and that the electronic device is not in the forward charging state means that the electronic device does not receive power input provided by the external device to charge the battery.

It should be understood that any one of the first interface and the second interface of the electronic device is connected to the external device and receives the power input of the external device, or both interfaces are connected to external devices and simultaneously receives the power input of the external devices connected to the two interfaces respectively, so that the electronic device may be in the forward charging state. In addition, when neither the first interface nor the second interface receives power input from the external device, the electronic device may not be in the forward charging state.

According to the foregoing content, if the device type of the external device connected to the charging interface of the electronic device is the source device, the electronic device receives the power input provided by the external device connected to the charging interface. Conversely, if the charging interface of the electronic device is not connected to the source device, the electronic device does not receive the power input of the external device. Based on this, when the first interface and/or the second interface are connected to the source device (that is, one of the two charging interfaces or both are connected to the source device), it means that the electronic device is in the forward charging state; and when neither the first interface nor the second interface is connected to the source device, it means that the electronic device is not in the forward charging state.

For example, that the first interface and/or the second interface are connected to the source device includes one of the following situations:
the first interface is connected to the source device, and the second interface is connected to the source device;
the first interface is connected to the source device, and the second interface is connected to the sink device;
the first interface is connected to the source device, and the second interface is in the non-connected state;
the first interface is connected to the sink device, and the second interface is connected to the source device; and
the first interface is in the non-connected state, and the second interface is connected to the source device.

For example, that neither the first interface nor the second interface is connected to the source device includes one of the following situations:
the first interface is connected to the sink device, and the second interface is in the non-connected state;
the first interface is connected to the sink device, and the second interface is connected to the sink device;
the first interface is in the non-connected state, and the second interface is connected to the sink device; and
the first interface is in the non-connected state, and the second interface is in the non-connected state.

Obviously, in the foregoing first preset condition, that the electronic device is not in the forward charging state, and the first interface and/or the second interface are connected to the sink device includes one of the following situations:
the first interface is connected to the sink device, and the second interface is in the non-connected state;
the first interface is in the non-connected state, and the second interface is connected to the sink device.

Based on this, in a specific implementation, the controller may determine whether the first interface and the second interface meet one of the foregoing three situations for outputting based on the connection information of the first interface and the connection information of the second interface. If so, it is determined that the first preset condition is met; and if not, it is determined that the first preset condition is not met. In the foregoing three situations, they are all device types of the external devices connected to the charging interface. Therefore, if the device type indicated by the connection information is the device type of the electronic device, another device type different from the device type indicated by the connection information may be determined as the device type of the external device connected to the charging interface.

In the electronic device shown in FIG. 4, when the electronic device is not in the forward charging state, the reverse output function of the battery charging controller is used to allow the battery to provide power output to the sink device connected to the charging interface through the battery charging controller to implement the reverse charging function. Since the electronic device implements reverse charging through a larger-capacity battery, a greater power output may be implemented and the high-power fast charging requirement of the user is met.

In addition, a common reverse charging solution in the industry is to add a PD controller and a BUCK circuit on the basis of FIG. 1, which are used alone to provide high-power fast charging to the external device. Adding the PD controller and the BUCK circuit is equivalent to a small charging system, and in this case, the software configuration is more complicated, debugging is more difficult, and the research and development investment cost is much higher. Compared with this solution, the embodiment shown in FIG. 4 only uses a few switches and some logic control to achieve external fast charging on the current architecture, which saves device costs, reduces the complexity of hardware circuit design, saves PCB design space, and reduces the design difficulty of PCB and structure, and has great advantages in terms of software configuration, debugging difficulty, and the research and development investment cost. In addition, the addition of more devices means an increase in the risk of product failure, so this embodiment also reduces the overall failure rate of the product.

Still refer to FIG. 4. In some embodiments of this application, the controller is further configured to control, when determining that the electronic device meets a second preset condition, the battery charging controller to switch to the forward charging state and control the target link to be turned on, where the second preset condition includes that the electronic device is in the forward charging state.

It should be noted that in the foregoing second preset condition, the five situations in which the electronic device is in the forward charging state have been described and will not be described again herein. As can be seen from the foregoing content, the battery charging controller has the forward output function and the reverse output function. Since only the forward output function of the battery charging controller is currently used, there is only one path in a hardware design, and the two functions cannot be supported at the same time. Based on this, in this embodiment, to give priority to ensuring the normal operation of the electronic device, when the electronic device is in the forward charging state, the battery charging controller is controlled to switch to the forward charging state to ensure the forward charging function of the electronic device. At the same time, the target link is controlled to be turned on, so that the PD controller provides power output and implement reverse charging, thereby meeting the user requirement of using the electronic device to reversely charge the external device.

The second preset condition also includes one of the following situations:
the electronic device is in the forward charging state; or
the electronic device is not in the forward charging state, and any charging interface is not connected to the sink device, that is, neither the first interface nor the second interface is connected to the sink device.

It should be noted that in the foregoing second preset condition, that the electronic device is not in the forward charging state and any one of the charging interfaces is not connected to the sink device means a fourth situation of the four situations in which the electronic device is not in the forward charging state: the first interface is in the non-connected state, and the second interface is also in the non-connected state. The four situations in which the electronic device is not in the forward charging state have been described above and details are not described again herein.

It can be seen that, different from the previous embodiment, in this embodiment, not only when the electronic device is in the forward charging state, the reverse output function of the battery charging controller is turned off and the external output function of the PD controller is turned on at the same time to ensure the forward charging function of the electronic device, but also when the first interface and the second interface are each in the non-forward charging state of the non-connected state (that is, not in the forward charging state), the forward charging function of the electronic device is ensured. That is to say, in this embodiment, when not charging (neither forward charging nor reverse charging), the electronic device is adjusted by default to a ready state in which the forward charging function is provided, so that when the forward charging is required, the forward charging is performed without link switching, which is beneficial to ensuring user experience of a commonly used forward charging function of the electronic device. It can be seen that in this embodiment, the second preset condition and the first preset condition are complementary and cover all statuses of the first interface and the second interface of the electronic device. Therefore, when the electronic device does not meet the first preset condition, the second preset condition is met; and when the electronic device does not meet the second preset condition, the first preset condition is met.

Certainly, in another embodiment, the situation in which both the first interface and the second interface are in the non-connected state may also be regarded as the foregoing first preset condition, which is not specifically limited in this embodiment of this application.

Still refer to FIG. 4. In some embodiments of this application, the target link further includes another link in the two second reverse charging links other than the second reverse charging link corresponding to the charging interface connected to the sink device. That is to say, when the controller determines that the electronic device meets the first preset condition, all second reverse charging links are controlled to be turned off; and when the controller determines that the electronic device meets the second preset condition, all second reverse charging links are controlled to be turned on.

It should be noted that when the electronic device meets the first preset condition, the reverse charging is performed by the first reverse charging link, and the two second reverse charging links are not used. Therefore, another second reverse charging link in the two second reverse charging links other than the second reverse charging link corresponding to the charging interface connected to the sink device may be turned off at the same time.

When the electronic device meets the second preset condition, the reverse charging is performed by the second reverse charging link. Using an example in which the first interface is connected to the source device for the forward charging, and the second interface is connected to the sink device for the reverse charging, since the PD controller detects that the first interface is connected to the source device, an internal switch is controlled to be turned off to cut off the path on which the first sub-link provides power output to the first interface. Based on this, when the electronic device meets the second preset condition, even if the two second reverse charging links are controlled to be turned on at the same time, the PD controller cannot provide power output to the first interface through the first sub-link, thereby avoiding affecting the forward charging process of the first interface. Compared with the embodiment in which the target link only includes the second reverse charging link corresponding to the charging interface connected to the sink device, in this embodiment, when the electronic device meets the first preset condition, all second reverse charging links are controlled to be turned off, and when the second preset condition is met, all second reverse charging links are controlled to be turned on, without recognizing the charging interface connected to the sink device, and controlling the corresponding second reverse charging link to be turned off or on. Obviously, this embodiment is beneficial to reducing the control complexity.

Still refer to FIG. 4. In some embodiments of this application, the connection information further indicates a current parameter and a voltage parameter required by the external device when the external device is the sink device. The fifth end P5 of the controller is further coupled to a sixth end D6 of the battery charging controller (the I2C between the controller and the battery charging controller in the figure illustrates the coupling relationship). The controller is further configured to control, based on the current parameter and the voltage parameter, a current and a voltage of the battery charging controller during reverse charging.

Specifically, in a CC communication process during reverse charging, the external device informs the electronic device of the current parameter and the voltage parameter that are required by the electronic device. The PD controller receives the current parameter and the voltage parameter through the I2C between the first interface and the second interface, and reports the current parameter and the voltage parameter to the controller. Based on the current parameter and the voltage parameter, the controller may configure a register of the battery charging controller to control the current and the voltage during reverse charging of the battery charging controller.

It should be noted that in a specific implementation, the electronic device using the current and the voltage when the battery charging controller is controlled to perform high-power reverse charging is not reached in one step, but a process of gradual increase. For example, when the electronic device starts reverse charging, the electronic device first configures the battery charging controller to reversely output a voltage of 5V, and the current parameter initially informed by the external device is usually a maximum of 3A. Subsequently, in a process of CC communication with the PD controller, the external device continues to inform the required voltage parameter and the current parameter. After the voltage parameter and the current parameter are received, the PD controller reports the voltage parameter and the current parameter to the controller, and the controller reconfigures current and voltage parts in the register of the battery charging controller to implement the high-power reverse charging function.

Still refer to FIG. 4. In some embodiments of this application, the controller is further configured to: determine, before reverse charging, whether output power of the electronic device is greater than a preset threshold. When the output power of the electronic device is greater than the preset threshold, the battery charging controller is controlled to switch to the reverse charging state for reverse charging.

In a specific implementation, before reverse charging, the controller may obtain the maximum power output (that is, output power) that the electronic device may provide by reading the current and voltage parts in the register of the battery charging controller. In this embodiment, when the output power of the electronic device is greater than the preset threshold (that is, the power of the electronic device is sufficient), the power output is provided to the outside, which is beneficial to ensuring the normal operation of the electronic device. In a specific implementation, a size of the preset threshold may be adjusted based on actual requirements.

Still refer to FIG. 4. In some embodiments of this application, the first reverse charging link is provided with a fourth switching element Q4 and a fifth switching element Q5 on a link between a node X1 and the first interface, and the first reverse charging link is provided with a sixth switching element Q6 and a seventh switching element Q7 on a link between the node X1 and the second interface. A first end of the fourth switching element Q4 is coupled to the first interface, a second end of the fourth switching element Q4 is coupled to a second end of the fifth switching element Q5, a first end of the fifth switching element Q5 is coupled to the battery charging controller, and a third end of the fourth switching element Q4 and a third end of the fifth switching element Q5 are coupled to the PD controller. A first end of the sixth switching element Q6 is coupled to the first interface, a second end of the sixth switching element Q6 is coupled to a second end of the seventh switching element Q7, a first end of the seventh switching element Q7 is coupled to the battery charging controller, and a third end of the sixth switching element Q6 and a third end of the seventh switching element Q7 are coupled to the PD controller.

The PD controller is coupled to the fourth switching element Q4, the fifth switching element Q5, the sixth switching element Q6, and the seventh switching element Q7 respectively, and is configured to control, after the CC handshake is successful, the fourth switching element Q4, the fifth switching element Q5, the sixth switching element Q6, and the seventh switching element Q7 to be turned on to implement the conduction of the first reverse charging link. For the specific implementation of the fourth switching element Q4, the fifth switching element Q5, the sixth switching element Q6, and the seventh switching element Q7, reference may be made to the specific implementation of the first switching element Q1, which will not be described again herein.

In this embodiment, the purpose of arranging two switching devices on each of the link of the first reverse charging link that is located between the node X1 and the first interface and the link of the first reverse charging link that is located between the node X1 and the second interface is to prevent leakage. In another embodiment, one switching element may also be provided, which is not specifically limited in this embodiment of this application.

In some embodiments of this application, the electronic device further includes an eighth switching element Q8. A first end of the eighth switching element Q8 is coupled to a seventh end D7 of the battery charging controller, and a second end of the eighth switching element Q8 is coupled to the battery. That is to say, the second end D2 of the battery charging controller is coupled to the battery through the eighth switching element Q8. In addition, a third end of the eighth switching element Q8 is coupled to the fifth end of the battery charging controller. The battery charging controller is configured to control the on and off of the eighth switching element Q8 through the fifth end D5 of the battery charging controller to control the battery for power output or power input. The eighth switching element Q8 may be a P-type transistor or a switching chip.

In some embodiments of this application, the first reverse charging link includes a ninth switching element Q9, a tenth switching element Q10, an eleventh switching element Q11, and a twelfth switching element Q12. A second end of the ninth switching element Q9 is coupled to the first interface and the second interface respectively, and a first end of the ninth switching element Q9 is coupled to a second end of the tenth switching element Q10. A first end of the tenth switching element Q10 is coupled to ground. A second end of the eleventh switching element Q11 is coupled to the battery, and a first end of the eleventh switching element Q11 is coupled to a second end of the twelfth switching element Q12. A first end of the twelfth switching element Q12 is coupled to ground. In addition, the first end of the ninth switching element Q9 and the second end of the tenth switching element Q10 are further coupled to the first end of the eleventh switching element Q11 and the second end of the twelfth switching element Q12 through an inductor L to form the path of the first reverse charging link.

A third end of the ninth switching element Q9 is coupled to the first end D1 of the battery charging controller, a third end of the tenth switching element Q10 is coupled to the second end D2 of the battery charging controller, a third end of the eleventh switching element Q11 is coupled to the third end D3 of the battery charging controller, and a third end of the twelfth switching element Q12 is coupled to the fourth end D4 of the battery charging controller. The first end D1 of the battery charging controller may output a first driving instruction to the ninth switching element Q9, the second end D2 of the battery charging controller may output a second driving instruction to the tenth switching element Q10, and the first driving instruction and the second driving instruction drive the ninth switching element Q9 and the tenth switching element Q10 to be alternately turned on and off at a high speed, thereby controlling the first reverse charging link to perform forward charging. In addition, the third end D3 of the battery charging controller may output a third driving instruction to the eleventh switching element Q11, the second end D2 of the battery charging controller may output a fourth driving instruction to the twelfth switching element Q12, and the third driving instruction and the fourth driving instruction drive the eleventh switching element Q11 and the twelfth switching element Q12 to be alternately turned on and off at a high speed, thereby controlling the first reverse charging link to perform reverse charging.

Certainly, in another embodiment, a set of switches of the ninth switching element Q9 and the tenth switching element Q10 may also be used to achieve voltage boosting, and a set of switches of the eleventh switching element Q11 and the twelfth switching element Q12 are used to achieve voltage reduction, which is not specifically limited in this embodiment of this application.

In a specific implementation, the first driving instruction and the second driving instruction are pulse width modulation (Pulse Width Modulation, PWM) signals respectively.

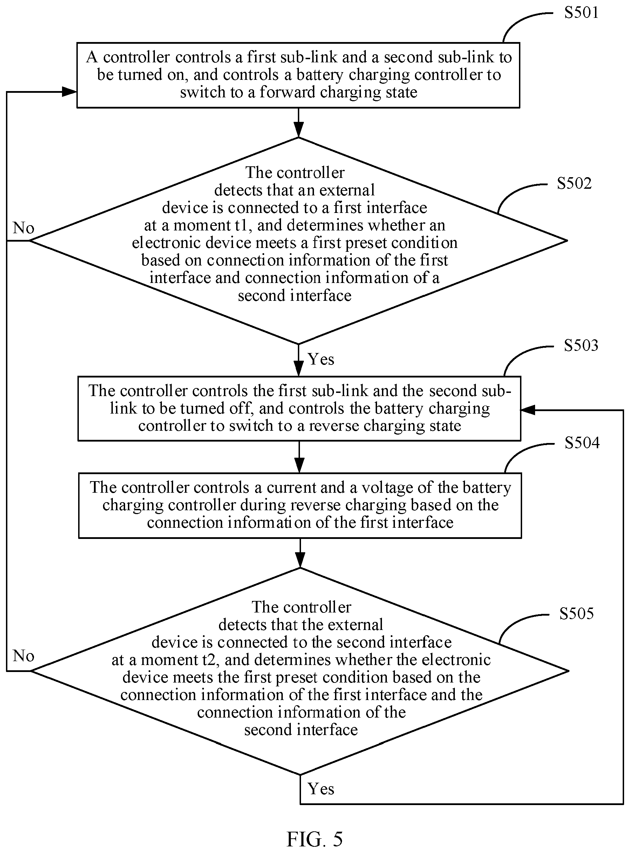

Refer to FIG. 5. FIG. 5 is a flowchart of a charging control method according to an embodiment of this application. This embodiment is based on the electronic device shown in FIG. 4 and is described by using an example in which the first interface accesses the external device at a moment t1 and the second interface accesses the external device at a moment t2. In addition, it should be noted that in an implementation shown in FIG. 5, the first preset condition and the second preset condition are either one or the other. The charging control method includes:

S501: A controller controls a first sub-link and a second sub-link to be turned on, and controls a battery charging controller to switch to a forward charging state.

After the electronic device is powered on, by default, the reverse output function of the battery charging controller is turned off, and a reverse charging path from the PD controller to the first interface and the second interface is turned on to ensure user experience of a commonly used forward charging function.

In a specific implementation, the controller may achieve the foregoing purpose by pulling up P1, P2, and P3.

S502: The controller detects that an external device is connected to a first interface at a moment t1, and determines whether an electronic device meets a first preset condition based on connection information of the first interface and connection information of a second interface.

If yes, perform S503; or if not, perform S501.

The process of how to detect and how to determine whether the electronic device meets the first preset condition based on the connection information is described in detail in the foregoing content, and will not be described again herein.

S503: The controller controls the first sub-link and the second sub-link to be turned off, and controls the battery charging controller to switch to a reverse charging state.

In a specific implementation, the controller may achieve the foregoing purpose by pulling down P1, P2, and P3.

S504: The controller controls a current and a voltage of the battery charging controller during reverse charging based on the connection information of the first interface.

The foregoing content has already described in detail how to control the current and the voltage of the battery charging controller to achieve the purpose of high-power charging, and will not be repeated here.

S505: The controller detects that the external device is connected to the second interface at a moment t2, and determines whether the electronic device meets the first preset condition based on the connection information of the first interface and the connection information of the second interface.

If yes, still perform S503; or if not, still perform S501.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, comprising:
a battery;
a first interface, wherein the first interface is configured to be connected to a first external device;
a power delivery, PD, controller, coupled to the first interface and configured to obtain a first connection information of the first interface, wherein the first connection information indicates a connection status of the first interface, and the connection status is a connected state or a non-connected state; the first connection information further indicates a device type of the external device and/or the electronic device when the first interface is in the connected state, and the device type is an output device or a receiving device;
a first reverse charging link, wherein the first interface is coupled to the battery through the first reverse charging link;
a battery charging controller, comprising a forward charging state and a reverse charging state, the battery charging controller being coupled to the first reverse charging link, and wherein in the forward charging state power is received from the external device by the electronic device, and in the reverse charging state power is provided to the external device from the electronic device;
and a controller, coupled to the PD controller and the battery charging controller; wherein the controller is configured to control, when determining that the electronic device meets a first preset condition based on the first connection information, the battery charging controller to switch to the reverse charging state; the controller is further configured to control, when determining that the electronic device meets a second preset condition, the battery charging controller to switch to the forward charging state;
wherein the electronic device comprises a first sub-link and the PD controller comprises a first power output end (Vout1) which is connected to the first interface through the first sub-link;
wherein the controller is coupled to the first sub-link and configured to control, when determining that the electronic device meets the first preset condition, the battery charging controller to switch to the reverse charging state and the first sub-link to be turned off for reverse charging;
wherein the electronic device further comprises a second sub-link and a second interface which is configured to connect a second external device;
the PD controller is coupled to the second interface and is configured to obtain a second connection information of the second interface; the second connection information is used to indicate the connection status of the second interface, and the connection state of the second interface is a connected state or a non-connected state; the second connection information is also used to indicate the device type of the second external device and/or the device type of the electronic device when the second interface is in the connected state, wherein the device type is an output device or a receiving device;
the PD controller further has a second power output end;
the second interface is connected to the second power output end (Vout2) through the second sub-link, and the second interface is also coupled to the battery through the first reverse charging link
wherein the first preset condition comprises that the electronic device is not in the forward charging state, and the first and/or second interface are connected to the receiving device; the second preset condition comprises that the electronic device is in the forward charging state, or the electronic device is not in the forward charging state and neither the first interface nor the second interface is connected to the receiving device.

2. The electronic device according to claim 1, wherein
when the first interface is connected to the output device, the electronic device is in the forward charging state; and
when both the first interface and the second interface are not connected to the output device, the electronic device is not in the forward charging state.

3. The electronic device according to claim 1, wherein the first sub-link comprises a first switching element (Q1); a first end of the first switching element (Q1) is coupled to the first interface, and a second end of the first switching element (Q1) is coupled to the first power output end (Vout1);
the third end of the first switching element (Q1) is coupled to the controller; the controller is configured to output a first control instruction which is used to instruct the first switching element (Q1) to switch to an on state or an off state; wherein, when the first switching element (Q1) is switched to the on state, the first sub-link is turned on; when the first switching element (Q1) is switched to the off state, the first sub-link is turned off.

4. The electronic device according to claim 1, wherein the first connection information further indicates a current parameter and a voltage parameter required by the first external device when the first external device is a receiving device;
the controller is coupled to the battery charging controller, and the controller is further configured to control, based on the current parameter and the voltage parameter, a current and a voltage when the battery charging controller switches to the reverse charging state for reverse charging.

5. The electronic device according to claim 1, wherein
when the first interface and/or the second interface is connected to the output device, the electronic device is in the forward charging state; and
when both the first interface and the second interface are not connected to the output device, the electronic device is not in the forward charging state.

6. The electronic device according to claim 5, wherein that the first interface and/or the second interface is connected to the output device comprises one of the following situations:
the first interface is connected to the output device, and the second interface is connected to the output device;
the first interface is connected to the output device, and the second interface is connected to the receiving device;
the first interface is connected to the output device, and the second interface is in the non-connected state;
the first interface is connected to the receiving device, and the second interface is connected to the output device; and
the first interface is in the non-connected state, and the second interface is connected to the output device.

7. The electronic device according to claim 5, wherein that both the first interface and the second interface are not connected to the output device comprises one of the following situations:
the first interface is connected to the receiving device, and the second interface is in the non-connected state;
the first interface is connected to the receiving device, and the second interface is connected to the receiving device;
the first interface is in the non-connected state, and the second interface is connected to the receiving device; or
the first interface is in the non-connected state, and the second interface is in the non-connected state.

8. The electronic device according to claim 3, wherein the second sub-link comprises a second switching element (Q2);
a first end of the second switching element (Q2) is coupled to the second interface, and a second end of the second switching element (Q2) is coupled to the second power output end;
a third end of the second switching element (Q2) is coupled to the controller; and the controller is configured to output a second control instruction, the second control instruction instructs the second switching element (Q2) to switch to the on state or the off state, wherein when the second switching element (Q2) switch to the on state, the second sub-link are turned on; and when the first switching element (Q1) and the second switching element (Q2) switch to the off state, the second sub-link are turned off.

9. The electronic device according to any one of the preceding claims, further comprising a third switching element (Q3), wherein
a first end of the third switching element (Q3) is coupled to the battery charging controller, a second end of the third switching element (Q3) is coupled to a reference ground, and a third end of the third switching element (Q3) is coupled to the controller; and the controller is further configured to output a third control instruction, wherein
the third control instruction instructs the third switching element (Q3) to switch to the on state or the off state; when the third switching element (Q3) switches to the on state, the battery charging controller switches to the reverse charging state; and when the third switching element (Q3) switches to the off state, the battery charging controller switches to the forward charging state.

10. The electronic device according to claim 9, wherein when the second external device is the receiving device, the second connection information further indicates a current parameter and a voltage parameter required by the second external device; and
the controller is coupled to the battery charging controller, and the controller is further configured to control, based on the current parameter and the voltage parameter, a current and a voltage when the battery charging controller switches to the reverse charging state for reverse charging.

11. The electronic device according to any one of the preceding claims, wherein the controller is further configured to:
determine, before reverse charging, whether output power of the electronic device is greater than a preset threshold; and
control, when the output power of the electronic device is greater than the preset threshold, the battery charging controller to switch to the reverse charging state for reverse charging.

12. The electronic device according to any one of the preceding claims, wherein the electronic device is a personal computer PC.

13. A charging system, comprising a first external device and the electronic device according to anyone of the preceding claims, wherein
the electronic device is connected to the first external device through the first interface, the electronic device charges the first external device, or the first external device charges the electronic device.

## Patentansprüche

1. Elektronische Vorrichtung, umfassend:
eine Batterie;
eine erste Schnittstelle, wobei die erste Schnittstelle dazu konfiguriert ist, mit einer ersten externen Vorrichtung verbunden zu werden;
einen Power Delivery (PD)-Controller, der mit der ersten Schnittstelle gekoppelt und dazu konfiguriert ist, eine erste Verbindungsinformation der ersten Schnittstelle zu erhalten, wobei die erste Verbindungsinformation einen Verbindungsstatus der ersten Schnittstelle angibt und der Verbindungsstatus ein verbundener Zustand oder ein nicht verbundener Zustand ist; wobei die erste Verbindungsinformation ferner einen Vorrichtungstyp der externen Vorrichtung und/oder der elektronischen Vorrichtung angibt, wenn sich die erste Schnittstelle im verbundenen Zustand befindet, und der Vorrichtungstyp eine Ausgabevorrichtung oder eine Empfangsvorrichtung ist;
eine erste Rückwärtsladeverbindung, wobei die erste Schnittstelle über die erste Rückwärtsladeverbindung mit der Batterie gekoppelt ist;
einen Batterieladecontroller, der einen Vorwärtsladezustand und einen Rückwärtsladezustand umfasst, wobei der Batterieladecontroller mit der ersten Rückwärtsladeverbindung gekoppelt ist, und wobei im Vorwärtsladezustand Strom von der externen Vorrichtung durch die elektronische Vorrichtung empfangen wird und im Rückwärtsladezustand Strom von der elektronischen Vorrichtung an die externe Vorrichtung bereitgestellt wird;
und einen Controller, der mit dem PD-Controller und dem Batterieladecontroller gekoppelt ist; wobei der Controller dazu konfiguriert ist, bei Bestimmung, dass die elektronische Vorrichtung basierend auf der ersten Verbindungsinformation eine erste voreingestellte Bedingung erfüllt, den Batterieladecontroller so zu steuern, dass er in den Rückwärtsladezustand schaltet; wobei der Controller ferner dazu konfiguriert ist, bei Bestimmung, dass die elektronische Vorrichtung eine zweite voreingestellte Bedingung erfüllt, den Batterieladecontroller so zu steuern, dass er in den Vorwärtsladezustand schaltet;
wobei die elektronische Vorrichtung eine erste Unterverbindung umfasst und der PD-Controller ein erstes Stromausgangsende (Vout1) umfasst, das über die erste Unterverbindung mit der ersten Schnittstelle verbunden ist;
wobei der Controller mit der ersten Unterverbindung gekoppelt und dazu konfiguriert ist, bei Bestimmung, dass die elektronische Vorrichtung die erste voreingestellte Bedingung erfüllt, den Batterieladecontroller so zu steuern, dass er in den Rückwärtsladezustand schaltet, und die erste Unterverbindung für ein Rückwärtsladen auszuschalten;
wobei die elektronische Vorrichtung ferner eine zweite Unterverbindung und eine zweite Schnittstelle umfasst, die dazu konfiguriert ist, eine zweite externe Vorrichtung zu verbinden;
Der PD-Controller ist mit der zweiten Schnittstelle gekoppelt und dazu konfiguriert, eine zweite Verbindungsinformation der zweiten Schnittstelle zu erhalten; die zweite Verbindungsinformation wird verwendet, um den Verbindungsstatus der zweiten Schnittstelle anzugeben, und der Verbindungszustand der zweiten Schnittstelle ist ein verbundener Zustand oder ein nicht verbundener Zustand; die zweite Verbindungsinformation wird außerdem verwendet, um den Gerätetyp des zweiten externen Geräts und/oder den Gerätetyp des elektronischen Geräts anzugeben, wenn sich die zweite Schnittstelle im verbundenen Zustand befindet, wobei der Gerätetyp ein Ausgabegerät oder ein Empfangsgerät ist;
der PD-Controller weist ferner einen zweiten Leistungsausgang auf;
die zweite Schnittstelle ist über die zweite Teilverbindung mit dem zweiten Leistungsausgang (Vout2) verbunden, und die zweite Schnittstelle ist auch über die erste Rückwärtsladeverbindung mit der Batterie gekoppelt
wobei die erste voreingestellte Bedingung umfasst, dass sich das elektronische Gerät nicht im Vorwärtsladezustand befindet und die erste und/oder zweite Schnittstelle mit dem Empfangsgerät verbunden sind; die zweite voreingestellte Bedingung umfasst, dass sich das elektronische Gerät im Vorwärtsladezustand befindet, oder dass sich das elektronische Gerät nicht im Vorwärtsladezustand befindet und weder die erste Schnittstelle noch die zweite Schnittstelle mit dem Empfangsgerät verbunden ist.

2. Das elektronische Gerät nach Anspruch 1, wobei
wenn die erste Schnittstelle mit dem Ausgabegerät verbunden ist, befindet sich das elektronische Gerät im Vorwärtsladezustand; und
wenn sowohl die erste Schnittstelle als auch die zweite Schnittstelle nicht mit dem Ausgabegerät verbunden sind, befindet sich das elektronische Gerät nicht im Vorwärtsladezustand.

3. Das elektronische Gerät nach Anspruch 1, wobei die erste Teilverbindung ein erstes Schaltelement (Q1) umfasst; ein erstes Ende des ersten Schaltelements (Q1) ist mit der ersten Schnittstelle gekoppelt, und ein zweites Ende des ersten Schaltelements (Q1) ist mit dem ersten Leistungsausgang (Vout1) gekoppelt;
das dritte Ende des ersten Schaltelements (Q1) ist mit dem Controller gekoppelt; der Controller ist dazu konfiguriert, einen ersten Steuerbefehl auszugeben, der verwendet wird, um das erste Schaltelement (Q1) anzuweisen, in einen Ein-Zustand oder einen Aus-Zustand zu schalten; wobei, wenn das erste Schaltelement (Q1) in den Ein-Zustand geschaltet wird, die erste Teilverbindung eingeschaltet wird; wenn das erste Schaltelement (Q1) in den Aus-Zustand geschaltet wird, wird die erste Teilverbindung ausgeschaltet.

4. Das elektronische Gerät nach Anspruch 1, wobei die erste Verbindungsinformation ferner einen Stromparameter und einen Spannungsparameter angibt, die von dem ersten externen Gerät benötigt werden, wenn das erste externen Gerät ein Empfangsgerät ist;
Die Steuereinheit ist mit der Batterieladesteuereinheit gekoppelt, und die Steuereinheit ist ferner dazu konfiguriert, basierend auf dem Stromparameter und dem Spannungsparameter einen Strom und eine Spannung zu steuern, wenn die Batterieladesteuereinheit für ein Rückwärtsladen in den Rückwärtsladezustand schaltet.

5. Elektronische Vorrichtung nach Anspruch 1, wobei
wenn die erste Schnittstelle und/oder die zweite Schnittstelle mit der Ausgabevorrichtung verbunden ist, sich die elektronische Vorrichtung im Vorwärtsladezustand befindet; und
wenn sowohl die erste Schnittstelle als auch die zweite Schnittstelle nicht mit der Ausgabevorrichtung verbunden sind, sich die elektronische Vorrichtung nicht im Vorwärtsladezustand befindet.

6. Elektronische Vorrichtung nach Anspruch 5, wobei die Verbindung der ersten Schnittstelle und/oder der zweiten Schnittstelle mit der Ausgabevorrichtung eine der folgenden Situationen umfasst:
die erste Schnittstelle ist mit der Ausgabevorrichtung verbunden und die zweite Schnittstelle ist mit der Ausgabevorrichtung verbunden;
die erste Schnittstelle ist mit der Ausgabevorrichtung verbunden und die zweite Schnittstelle ist mit der Empfangsvorrichtung verbunden;
die erste Schnittstelle ist mit der Ausgabevorrichtung verbunden und die zweite Schnittstelle befindet sich im nicht verbundenen Zustand;
die erste Schnittstelle ist mit der Empfangsvorrichtung verbunden und die zweite Schnittstelle ist mit der Ausgabevorrichtung verbunden; und
die erste Schnittstelle befindet sich im nicht verbundenen Zustand und die zweite Schnittstelle ist mit der Ausgabevorrichtung verbunden.

7. Elektronische Vorrichtung nach Anspruch 5, wobei der Zustand, dass sowohl die erste Schnittstelle als auch die zweite Schnittstelle nicht mit der Ausgabevorrichtung verbunden sind, eine der folgenden Situationen umfasst:
die erste Schnittstelle ist mit der Empfangsvorrichtung verbunden und die zweite Schnittstelle befindet sich im nicht verbundenen Zustand;
die erste Schnittstelle ist mit der Empfangsvorrichtung verbunden und die zweite Schnittstelle ist mit der Empfangsvorrichtung verbunden;
die erste Schnittstelle befindet sich im nicht verbundenen Zustand und die zweite Schnittstelle ist mit der Empfangsvorrichtung verbunden; oder
die erste Schnittstelle befindet sich im nicht verbundenen Zustand und die zweite Schnittstelle befindet sich im nicht verbundenen Zustand.

8. Elektronische Vorrichtung nach Anspruch 3, wobei die zweite Unterverbindung ein zweites Schaltelement (Q2) umfasst;
ein erstes Ende des zweiten Schaltelements (Q2) ist mit der zweiten Schnittstelle gekoppelt und ein zweites Ende des zweiten Schaltelements (Q2) ist mit dem zweiten Leistungsausgang gekoppelt;
ein dritter Anschluss des zweiten Schaltelements (Q2) ist mit der Steuerung gekoppelt; und die Steuerung ist so konfiguriert, dass sie einen zweiten Steuerbefehl ausgibt, wobei der zweite Steuerbefehl das zweite Schaltelement (Q2) anweist, in den Ein-Zustand oder den Aus-Zustand zu schalten, wobei, wenn das zweite Schaltelement (Q2) in den Ein-Zustand schaltet, die zweite Teilverbindung eingeschaltet wird; und wenn das erste Schaltelement (Q1) und das zweite Schaltelement (Q2) in den Aus-Zustand schalten, die zweite Teilverbindung ausgeschaltet wird.

9. Die elektronische Vorrichtung nach einem der vorhergehenden Ansprüche, ferner umfassend ein drittes Schaltelement (Q3), wobei
ein erster Anschluss des dritten Schaltelements (Q3) mit der Batterieladesteuerung gekoppelt ist, ein zweiter Anschluss des dritten Schaltelements (Q3) mit einer Referenzmasse gekoppelt ist und ein dritter Anschluss des dritten Schaltelements (Q3) mit der Steuerung gekoppelt ist; und die Steuerung ferner so konfiguriert ist, dass sie einen dritten Steuerbefehl ausgibt, wobei
der dritte Steuerbefehl das dritte Schaltelement (Q3) anweist, in den Ein-Zustand oder den Aus-Zustand zu schalten; wenn das dritte Schaltelement (Q3) in den Ein-Zustand schaltet, die Batterieladesteuerung in den Rückwärtslademodus schaltet; und wenn das dritte Schaltelement (Q3) in den Aus-Zustand schaltet, die Batterieladesteuerung in den Vorwärtslademodus schaltet.

10. Die elektronische Vorrichtung nach Anspruch 9, wobei, wenn die zweite externe Vorrichtung die empfangende Vorrichtung ist, die zweiten Verbindungsinformationen ferner einen Stromparameter und einen Spannungsparameter angeben, die von der zweiten externen Vorrichtung benötigt werden; und
die Steuerung mit der Batterieladesteuerung gekoppelt ist, und die Steuerung ferner so konfiguriert ist, dass sie basierend auf dem Stromparameter und dem Spannungsparameter einen Strom und eine Spannung steuert, wenn die Batterieladesteuerung zum Rückwärtsladen in den Rückwärtslademodus schaltet.

11. Die elektronische Vorrichtung nach einem der vorhergehenden Ansprüche, wobei die Steuerung ferner konfiguriert ist zum:
Bestimmen, vor dem Rückwärtsladen, ob die Ausgangsleistung der elektronischen Vorrichtung größer als ein voreingestellter Schwellenwert ist; und
Steuern der Batterieladesteuerung, wenn die Ausgangsleistung der elektronischen Vorrichtung größer als der voreingestellte Schwellenwert ist, in den Rückwärtslademodus zum Rückwärtsladen zu schalten.

12. Die elektronische Vorrichtung nach einem der vorhergehenden Ansprüche, wobei die elektronische Vorrichtung ein Personal Computer (PC) ist.

13. Ein Ladesystem, umfassend eine erste externe Vorrichtung und die elektronische Vorrichtung nach einem der vorhergehenden Ansprüche, wobei
Das elektronische Gerät ist über die erste Schnittstelle mit dem ersten externen Gerät verbunden; das elektronische Gerät lädt das erste externe Gerät, oder das erste externe Gerät lädt das elektronische Gerät.

## Revendications

1. Un dispositif électronique, comprenant :
une batterie ;
une première interface, dans lequel la première interface est configurée pour être connectée à un premier dispositif externe ;
un contrôleur de distribution de puissance, PD, couplé à la première interface et configuré pour obtenir une première information de connexion de la première interface, dans lequel la première information de connexion indique un état de connexion de la première interface, et l'état de connexion est un état connecté ou un état non connecté ; la première information de connexion indique en outre un type de dispositif du dispositif externe et/ou du dispositif électronique lorsque la première interface est dans l'état connecté, et le type de dispositif est un dispositif de sortie ou un dispositif de réception ;
une première liaison de charge inversée, dans lequel la première interface est couplée à la batterie par l'intermédiaire de la première liaison de charge inversée ;
un contrôleur de charge de batterie, comprenant un état de charge directe et un état de charge inversée, le contrôleur de charge de batterie étant couplé à la première liaison de charge inversée, et dans lequel, dans l'état de charge directe, de la puissance est reçue du dispositif externe par le dispositif électronique, et dans l'état de charge inversée, de la puissance est fournie au dispositif externe depuis le dispositif électronique ;
et un contrôleur, couplé au contrôleur PD et au contrôleur de charge de batterie ; dans lequel le contrôleur est configuré pour commander, lorsqu'il détermine que le dispositif électronique remplit une première condition prédéfinie sur la base de la première information de connexion, le contrôleur de charge de batterie pour basculer vers l'état de charge inversée ; le contrôleur est en outre configuré pour commander, lorsqu'il détermine que le dispositif électronique remplit une seconde condition prédéfinie, le contrôleur de charge de batterie pour basculer vers l'état de charge directe ;
dans lequel le dispositif électronique comprend une première sous-liaison et le contrôleur PD comprend une première extrémité de sortie de puissance (Vout1) qui est connectée à la première interface par l'intermédiaire de la première sous-liaison ;
dans lequel le contrôleur est couplé à la première sous-liaison et configuré pour commander, lorsqu'il détermine que le dispositif électronique remplit la première condition prédéfinie, le contrôleur de charge de batterie pour basculer vers l'état de charge inversée et la première sous-liaison pour être désactivée pour la charge inversée ;
dans lequel le dispositif électronique comprend en outre une seconde sous-liaison et une seconde interface qui est configurée pour connecter un second dispositif externe ;
le contrôleur PD est couplé à la seconde interface et est configuré pour obtenir une seconde information de connexion de la seconde interface ; la seconde information de connexion est utilisée pour indiquer l'état de connexion de la seconde interface, et l'état de connexion de la seconde interface est un état connecté ou un état non connecté ; la seconde information de connexion est également utilisée pour indiquer le type de dispositif du second dispositif externe et/ou le type de dispositif du dispositif électronique lorsque la seconde interface est dans l'état connecté, dans lequel le type de dispositif est un dispositif de sortie ou un dispositif de réception ;
le contrôleur PD comporte en outre une seconde extrémité de sortie de puissance ;
la seconde interface est connectée à la seconde extrémité de sortie de puissance (Vout2) par le biais de la seconde sous-liaison, et la seconde interface est également couplée à la batterie par le biais de la première liaison de charge inversée
dans lequel la première condition prédéfinie comprend le fait que le dispositif électronique n'est pas dans l'état de charge directe, et que la première et/ou la seconde interface sont connectées au dispositif de réception ; la seconde condition prédéfinie comprend le fait que le dispositif électronique est dans l'état de charge directe, ou que le dispositif électronique n'est pas dans l'état de charge directe et qu'aucune de la première interface ou de la seconde interface n'est connectée au dispositif de réception.

2. Le dispositif électronique selon la revendication 1, dans lequel
lorsque la première interface est connectée au dispositif de sortie, le dispositif électronique est dans l'état de charge directe ; et
lorsque ni la première interface ni la seconde interface ne sont connectées au dispositif de sortie, le dispositif électronique n'est pas dans l'état de charge directe.

3. Le dispositif électronique selon la revendication 1, dans lequel la première sous-liaison comprend un premier élément de commutation (Q1) ; une première extrémité du premier élément de commutation (Q1) est couplée à la première interface, et une seconde extrémité du premier élément de commutation (Q1) est couplée à la première extrémité de sortie de puissance (Vout1) ;
la troisième extrémité du premier élément de commutation (Q1) est couplée au contrôleur ; le contrôleur est configuré pour émettre une première instruction de commande qui est utilisée pour ordonner au premier élément de commutation (Q1) de passer à un état passant ou à un état bloqué ; dans lequel, lorsque le premier élément de commutation (Q1) est commuté à l'état passant, la première sous-liaison est activée ; lorsque le premier élément de commutation (Q1) est commuté à l'état bloqué, la première sous-liaison est désactivée.

4. Le dispositif électronique selon la revendication 1, dans lequel la première information de connexion indique en outre un paramètre de courant et un paramètre de tension requis par le premier dispositif externe lorsque le premier dispositif externe est un dispositif de réception ;
le contrôleur est couplé au contrôleur de charge de batterie, et le contrôleur est en outre configuré pour commander, sur la base du paramètre de courant et du paramètre de tension, un courant et une tension lorsque le contrôleur de charge de batterie commute vers l'état de charge inverse pour une charge inverse.

5. Dispositif électronique selon la revendication 1, dans lequel
lorsque la première interface et/ou la seconde interface est connectée au dispositif de sortie, le dispositif électronique est dans l'état de charge directe ; et
lorsque ni la première interface ni la seconde interface n'est connectée au dispositif de sortie, le dispositif électronique n'est pas dans l'état de charge directe.

6. Dispositif électronique selon la revendication 5, dans lequel le fait que la première interface et/ou la seconde interface soit connectée au dispositif de sortie comprend l'une des situations suivantes :
la première interface est connectée au dispositif de sortie, et la seconde interface est connectée au dispositif de sortie ;
la première interface est connectée au dispositif de sortie, et la seconde interface est connectée au dispositif récepteur ;
la première interface est connectée au dispositif de sortie, et la seconde interface est dans l'état non connecté ;
la première interface est connectée au dispositif récepteur, et la seconde interface est connectée au dispositif de sortie ; et
la première interface est dans l'état non connecté, et la seconde interface est connectée au dispositif de sortie.

7. Dispositif électronique selon la revendication 5, dans lequel le fait que ni la première interface ni la seconde interface ne soit connectée au dispositif de sortie comprend l'une des situations suivantes :
la première interface est connectée au dispositif récepteur, et la seconde interface est dans l'état non connecté ;
la première interface est connectée au dispositif récepteur, et la seconde interface est connectée au dispositif récepteur ;
la première interface est dans l'état non connecté, et la seconde interface est connectée au dispositif récepteur ; ou
la première interface est dans l'état non connecté, et la seconde interface est dans l'état non connecté.

8. Dispositif électronique selon la revendication 3, dans lequel la seconde sous-liaison comprend un second élément de commutation (Q2) ;
une première extrémité du second élément de commutation (Q2) est couplée à la seconde interface, et une seconde extrémité du second élément de commutation (Q2) est couplée à la seconde extrémité de sortie de puissance ;
une troisième extrémité du deuxième élément de commutation (Q2) est couplée au contrôleur ; et le contrôleur est configuré pour délivrer une deuxième instruction de commande, la deuxième instruction de commande ordonne au deuxième élément de commutation (Q2) de passer à l'état passant ou à l'état bloqué, où lorsque le deuxième élément de commutation (Q2) passe à l'état passant, la deuxième sous-liaison est activée ; et lorsque le premier élément de commutation (Q1) et le deuxième élément de commutation (Q2) passent à l'état bloqué, la deuxième sous-liaison est désactivée.

9. Dispositif électronique selon l'une quelconque des revendications précédentes, comprenant en outre un troisième élément de commutation (Q3), dans lequel
une première extrémité du troisième élément de commutation (Q3) est couplée au contrôleur de charge de batterie, une deuxième extrémité du troisième élément de commutation (Q3) est couplée à une masse de référence, et une troisième extrémité du troisième élément de commutation (Q3) est couplée au contrôleur ; et le contrôleur est en outre configuré pour délivrer une troisième instruction de commande, dans lequel
la troisième instruction de commande ordonne au troisième élément de commutation (Q3) de passer à l'état passant ou à l'état bloqué ; lorsque le troisième élément de commutation (Q3) passe à l'état passant, le contrôleur de charge de batterie passe à l'état de charge inverse ; et lorsque le troisième élément de commutation (Q3) passe à l'état bloqué, le contrôleur de charge de batterie passe à l'état de charge directe.

10. Dispositif électronique selon la revendication 9, dans lequel lorsque le deuxième dispositif externe est le dispositif de réception, la deuxième information de connexion indique en outre un paramètre de courant et un paramètre de tension requis par le deuxième dispositif externe ; et
le contrôleur est couplé au contrôleur de charge de batterie, et le contrôleur est en outre configuré pour commander, sur la base du paramètre de courant et du paramètre de tension, un courant et une tension lorsque le contrôleur de charge de batterie passe à l'état de charge inverse pour une charge inverse.

11. Dispositif électronique selon l'une quelconque des revendications précédentes, dans lequel le contrôleur est en outre configuré pour :
déterminer, avant la charge inverse, si la puissance de sortie du dispositif électronique est supérieure à un seuil prédéfini ; et
commander, lorsque la puissance de sortie du dispositif électronique est supérieure au seuil prédéfini, le contrôleur de charge de batterie pour qu'il passe à l'état de charge inverse pour une charge inverse.

12. Dispositif électronique selon l'une quelconque des revendications précédentes, dans lequel le dispositif électronique est un ordinateur personnel PC.

13. Système de charge, comprenant un premier dispositif externe et le dispositif électronique selon l'une quelconque des revendications précédentes, dans lequel
le dispositif électronique est connecté au premier dispositif externe par l'intermédiaire de la première interface, le dispositif électronique charge le premier dispositif externe, ou le premier dispositif externe charge le dispositif électronique.
